# FASCICULE DE BREVET EUROPEEN

(11) **EP 1 415 855 B1**
(45) Date de publication et mention de la délivrance du brevet: **30.12.2009**
(21) Numéro de dépôt: 03292636.2
(22) Date de dépôt: 22.10.2003
(51) Int. Cl.: B60P 7/08

(54) **Agencement d'arrimage d'objets sur un support**
Verankerungsanordnung für Gegenständen auf einer Unterlage
Arrangement for fixation of objects on a support

(30) Priorité: 30.10.2002 FR 0213618
(43) Date de publication de la demande: 06.05.2004
(73) Titulaire: Lisi Automotive Rapid, 95650 Puiseux Pontoise (FR)
(72) Inventeur: Leon, Jean-Pierre René, 78800 Houilles (FR); Perol, Rodolphe Dominique Gilles, 75015 Paris (FR); Breugnot, Fabrice Frédéric Hubert, 93160 Noisy le Grand (FR)
(74) Mandataire: Thinat, Michel

(56) Documents cités:
- DE-A- 4 226 886
- GB-A- 2 167 354
- US-A- 3 377 039
- US-A- 3 422 508
- US-A- 5 752 791

## Description

L'invention concerne un agencement d'arrimage d'objets sur un support, notamment de bagages dans le coffre d'un véhicule automobile, du type comprenant un anneau d'arrimage pour le passage d'un élément filiforme de maintien des objets, un moyen de fixation de l'anneau à un dispositif de retenue prévu sur la structure de support.

Les agencements d'arrimage, de ce type, qui sont connus, comportent, à titre de moyen de fixation, une patte à laquelle l'anneau d'arrimage est articulé et qui peut être fixée par une vis susceptible de s'engager dans un trou fileté prévu dans le support.

Un autre example de cette technique antérieure est divulgué par le document GB-A-2167354.

Ces agencements présentent l'inconvénient d'avoir une structure relativement complexe et encombrante.

La présente invention a pour but de pallier ces inconvénients.

Pour atteindre ce but, l'agencement d'arrimage selon l'invention est caractérisé en ce que le moyen de fixation fait partie intégrante de l'anneau, que le dispositif de retenue de l'anneau comporte un creux et une goupille disposée au-dessus du creux et fixée de part et d'autre de celui-ci et en ce que l'anneau est monté sur la goupille dans la zone située au-dessus du creux.

Selon une caractéristique de l'invention, l'anneau (1) est formé par une pièce en forme d'un U dont la base est configurée en berceaux (14, 25) de réception de la goupille (3) et les branches comportent des évidements (9) de passage de l'organe filiforme de maintien.

Selon encore une autre caractéristique de l'invention, un creux (7) précité de la structure de support est réalisé sous forme d'un embouti négatif dans la face correspondante de la structure de support.

Selon encore une autre caractéristique de l'invention, un creux (7) est réalisé sous forme d'une perforation dans une plaque (5) de la structure de support.

Selon encore une autre caractéristique de l'invention, la goupille (3) est fixée sur la structure de support par soudage, la structure comportant alors une plaque métallique (5) emboutie ou poinçonnée.

Selon encore une autre caractéristique de l'invention, l'anneau (1) est obtenu par cintrage d'un élément découpé dans un feuillard.

Selon encore une autre caractéristique de l'invention, l'élément découpé présente la forme d'un ovale évidé comportant des portions latérales droites en forme de barrettes (12) et des portions d'extrémité arquées (13).

Selon encore une autre caractéristique de l'invention, l'élément découpé a une forme générale oblongue dont les extrémités présentent la forme de bagues (19) et la partie intermédiaire est formée par deux barrettes parallèles (21) reliant les deux portions de bague s(19) et cintrées chacune en son milieu pour former un berceau (25) de réception de la goupille (3).

Selon encore une autre caractéristique de l'invention, l'anneau (1) comporte, entre les deux barrettes (21), en saillie à partir de chaque portion en forme de bagues (19) une languette (23) qui s'étend jusqu'au niveau des berceaux (25) pour assurer un certain blocage de l'anneau sur la goupille.

Selon une caractéristique de l'invention, l'anneau est réalisé sous forme d'un organe en forme d'un U, obtenu par pliage d'une pièce issue d'un feuillard, l'organe filiforme passant à travers des découpes dans les branches de l'organe en U.

Selon une autre caractéristique de l'invention, un creux précité de la structure de support est réalisé sous forme d'un embouti négatif dans la face correspondante de la structure de support.

Selon une autre caractéristique de l'invention, un creux est réalisé sous forme d'une perforation dans une plaque de la structure de support.

Selon encore une autre caractéristique de l'invention, la goupille est fixée sur la structure de support par soudage, la structure comportant alors une plaque métallique emboutie ou poinçonnée.

L'invention sera mieux comprise, et d'autres buts, caractéristiques, détails et avantages de celle-ci apparaîtront plus clairement au cours de la description explicative qui va suivre faite en référence aux dessins annexés donnés uniquement à titre d'exemple illustrant deux modes de réalisation de l'invention et dans lesquels:
- la figure 1 est une vue en perspective d'un premier mode de réalisation d'un agencement d'arrimage selon l'invention ;
- la figure 2 est une vue en direction de la flèche II de l'anneau d'arrimage selon la figure 1 ;
- la figure 3 est une vue en direction de la flèche III de l'anneau d'arrimage selon la figure 2 ;
- la figure 4 est une vue de dessus en direction de la flèche IV de l'anneau d'arrimage de la figure 2 ;
- la figure 5 est une vue en perspective d'un autre mode de réalisation d'un anneau d'arrimage selon l'invention ;
- la figure 6 est une vue latérale de l'anneau d'arrimage selon la figure 5 ;
- la figure 7 est une vue en direction de flèche VII de la figure 6, et
- la figure 8 est une vue de dessus en direction de la flèche VIII de l'anneau d'arrimage de la figure 6.

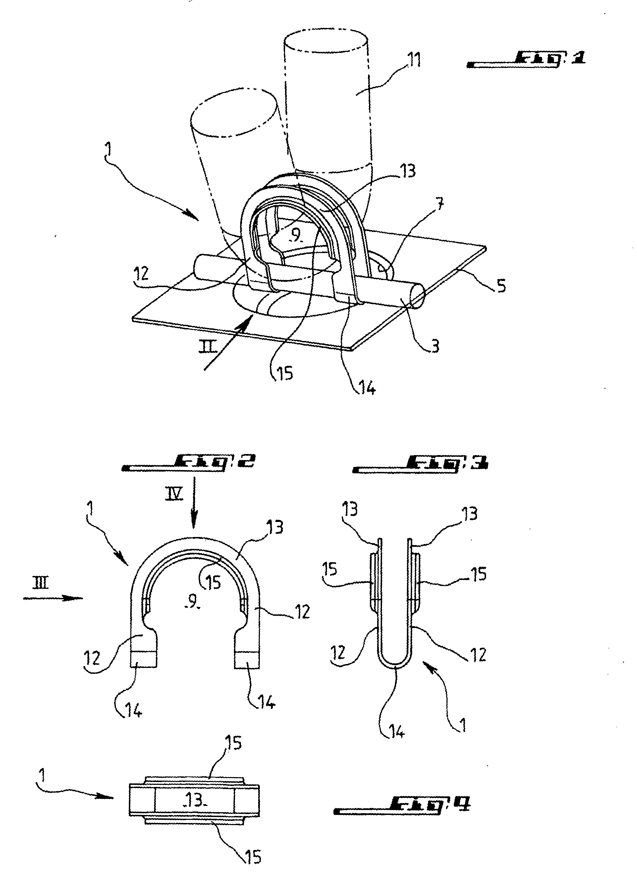

En se référant à la figure 1, on constate qu'un agencement d'arrimage d'objets sur une structure de support, notamment des bagages dans un coffre de voiture comporte essentiellement, selon le premier mode de réalisation représenté, un anneau d'arrimage 1 monté sur une goupille 3 fixée par exemple par soudage sur une plaque de support 5, de part et d'autre d'un creux 7. La plaque 5 est avantageusement une tôle du coffre de voiture. Le creux peut être réalisé par poinçonnage ou par emboutissage de cette tôle. L'anneau permet le passage d'un câble, d'une corde ou d'une sangle indiqué en 11 pour le maintien des objets.

L'anneau est constitué d'une pièce en forme d'un U obtenue par découpe dans un feuillard d'un flan de forme ovale évidée de façon qu'il ne subsiste que deux barrettes latérales sensiblement droites 12 et deux portions arquées d'extrémité 13 en forme de demi-cercles. Puis le flanc ovale est cintré au niveau du milieu des deux barrettes 12 autour d'un axe perpendiculaire à l'axe longitudinal de l'ovale, selon un rayon de courbure légèrement supérieur au rayon de la goupille 3. On obtient ainsi deux berceaux alignés 14 pour la réception de cette goupille, comme on le voit sur la figure 1. Après la formation de la pièce en U constituant l'anneau, le câble de maintien 11 peut passer à travers les portions d'évidement délimitées par les extrémités arquées 13 et forment le passage 9.

Pour rigidifier l'anneau ainsi obtenu, on a pratiqué une découpe au niveau des passages 9 et replié perpendiculairement les bords de la découpe semi-circulaire pour obtenir des rebords transversaux de rigidification 15. Les rebords repliés des passages 9 sont également prévus et configurés pour ne pas agresser les liens passant dans l'anneau.

L'anneau 1 peut ensuite être mis en place sur la goupille 3 de façon que celle-ci soit positionnée dans les berceaux 14 des barrettes de l'anneau.

Le mode de réalisation de l'anneau d'arrimage 1 selon le deuxième mode de réalisation est également réalisé par découpe d'une pièce dans un feuillard et par pliage en U de la pièce découpée. Cependant, selon ce deuxième mode de réalisation, la pièce découpée comporte au niveau de chaque extrémité une découpe circulaire 19 de façon que chaque extrémité présente la forme d'une bague, et deux barrettes 21 parallèles, qui relient les deux extrémités en forme de bague 19 et sont symétriques par rapport à l'axe longitudinal de la pièce issue du feuillard. Entre les deux barrettes 21 sont découpées également dans le feuillard deux languettes 23 qui s'étendent parallèlement aux barrettes 21, au milieu entre celles-ci, chacune à partir d'une portion d'extrémité en forme de bague 19.

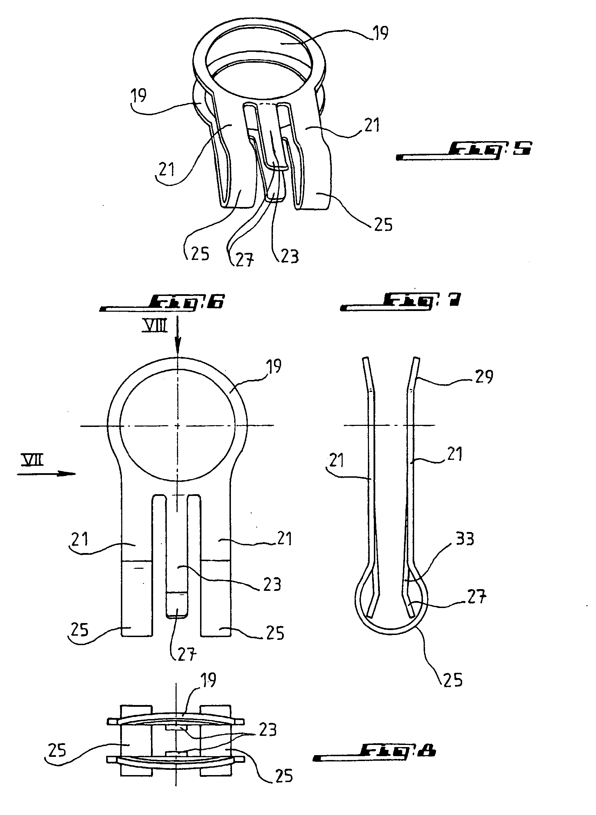

Comme le montre la figure 7, après le pliage en U de la pièce découpée, la base de chaque barrette repliée 21 présente le profil d'un berceau arrondi et élargi 25 dans lequel s'étendent les extrémités 27 des languettes 23, qui sont repliées légèrement vers l'extérieur. Grâce à cette configuration des extrémités 27 des languettes 23 et des berceaux 25, on obtient un bon accrochage de l'anneau sur sa goupille de fixation 3 sur laquelle il est monté de la manière illustrée sur la figure 1.

On constate en outre que la partie d'extrémité 29 de chaque portion en forme de bague 19 est légèrement repliée vers l'extérieur et courbée, comme cela se voit sur les figures 7 et 8.

Il ressort de la description qui vient d'être faite, des deux modes de réalisation d'un agencement d'arrimage selon l'invention, que le nombre des pièces utilisées est réduit par rapport à l'état de la technique, ce qui occasionne un gain de poids ainsi qu'un gain de temps au montage, puisqu'il n'y a plus d'opération de vissage. Le coût des agencements d'arrimage est également réduit.

## Revendications

1. Agencement d'arrimage d'objets sur un support, notamment de bagages dans le coffre d'un véhicule automobile, du type comprenant un anneau d'arrimage pour le passage d'un élément filiforme de maintien des objets, un moyen de fixation de l'anneau à un dispositif de retenue prévu sur la structure de support, le moyen de fixation faisant partie intégrante de l'anneau (1) et le dispositif de retenue de l'anneau comportant un creux (7) et une goupille disposée au dessus du creux (7) et fixée de part et d'autre de celui-ci à la structure de support, l'anneau (1) étant monté sur la goupille (3) dans la zone située au-dessus du creux (7), **caractérisé en ce que** l'anneau (1) est formé par une pièce en forme d'un U dont la base est configurée en berceaux (14, 25) de réception de la goupille (3) et dont les branches comportent des évidements (9) de passage de l'organe filiforme de maintien.

2. Agencement selon la revendication 1, **caractérisé en ce que** le creux (7) de la structure de support est réalisé sous forme d'un embouti négatif dans la face correspondante de la structure de support.

3. Agencement selon la revendication 1, **caractérisé en ce que** le creux (7) est réalisé sous forme d'une perforation dans une plaque (5) de la structure de support.

4. Agencement selon l'une des revendications 1 à 3, **caractérisé en ce que** la goupille (3) est fixée sur la structure de support par soudage, la structure comportant alors une plaque métallique (5) emboutie ou poinçonnée.

5. Agencement selon l'une des revendications 1 à 4, **caractérisé en ce que** l'anneau (1) est obtenu par cintrage d'un élément découpé dans un feuillard.

6. Agencement selon la revendication 5, **caractérisé en ce que** l'élément découpé présente la forme d'un ovale évidé comportant des portions latérales droites en forme de barrettes (21) et des portions d'extrémité arquées (13).

7. Agencement selon la revendication 5, **caractérisé en ce que** l'élément découpé a une forme générale oblongue avec des extrémités présentant la forme de bagues (19) et une partie intermédiaire formée par deux barrettes parallèles (21) reliant les deux portions de bague ( 19) entre elles, les barrettes étant destinées à être cintrées chacune en son milieu pour former un berceau (25) de réception de la goupille (3).

8. Agencement selon la revendication 7, **caractérisé en ce que** l'anneau (1) comporte, entre les deux barrettes (21), en saillie à partir de chaque portion en forme de bague (19) une languette (23) qui s'étend jusqu'au niveau des berceaux (25) pour assurer un certain blocage de l'anneau sur la goupille.

## Claims

1. An arrangement for fixation of objects on a support, in particular luggage in the trunk of a motor vehicle, of the type comprising a fixation ring for the passage of a filiform element for maintaining objects, a means for fixation of the ring to a retaining device provided on the support structure, the fixation means being integral with the ring (1) and the retaining device of the ring comprising a hollow (7) and a pin arranged above the hollow (7) and fixed on either side thereof to the support structure, the ring (1) being mounted on the pin (3) in the zone situated above the hollow (7), **characterized in that** the ring (1) is formed by a U-shaped piece whereof the base is configured in a cradle (14, 25) for receiving the pin (3) and the branches of which comprise recesses (9) for passage of the filiform maintaining member.

2. The arrangement according to claim 1, **characterized in that** the hollow (7) of the support structure is realized in the form of a negative packing in the corresponding face of the support structure.

3. The arrangement according to claim 1, **characterized in that** the hollow (7) is realized in the form of a perforation in a plate (5) of the support structure.

4. The arrangement according to one of claims 1 to 3, **characterized in that** the pin (3) is fixed on the support structure by welding, the structure then comprising a pressed or punched metal plate (5).

5. The arrangement according to one of claims 1 to 4, **characterized in that** the ring (1) is obtained by bending of an element cut out in a strip.

6. The arrangement according to claim 5, **characterized in that** the cut-out element has the shape of a hollowed out oval comprising straight lateral portions in the form of short bars (21) and arched end portions (13).

7. The arrangement according to claim 5, **characterized in that** the cut-out element has a generally oblong shape with ends having a ring shape (19) and an intermediate part formed by two parallel short bars (21) connecting the two ring portions (19) to each other, the short bars being intended to be bent each at its middle in order to form a cradle (25) for receiving the pin (3).

8. The arrangement according to claim 7, **characterized in that** the ring (1) comprises, between the two short bars (21), protruding from each ring-shaped portion (19), a lug (23) which extends to the cradles (25) in order to ensure a certain blocking of the ring on the pin.

## Patentansprüche

1. Anordnung zum Verankern von Gegenständen auf einer Auflage, insbesondere von Gepäck im Kofferraum eines Kraftfahrzeuges, von der Art umfassend eine Verankerungsöse für den Durchgang eines drahtförmigen Elements zum Festhalten der Gegenstände, ein Mittel zum Befestigen der Öse an einer Haltevorrichtung, die auf der Auflagestruktur bereitgestellt wird, wobei das Befestigungsmittel ein Grundbestandteil der Öse (1) ist und die Ösenhaltevorrichtung eine Vertiefung (7) und einen Stift, der über der Vertiefung (7) angeordnet und auf beiden Seiten davon an der Auflagestruktur befestigt ist, umfasst, wobei die Öse (1) an dem Stift (3) in dem Bereich, der sich über der Vertiefung (7) befindet, angebracht ist, **dadurch gekennzeichnet, dass** die Öse (1) durch ein U-förmiges Teil gebildet wird, dessen Boden als Halterungen (14, 25) zum Aufnehmen des Stiftes (3) konfiguriert ist und dessen Schenkel Aussparungen (9) für den Durchgang des drahtförmigen Halteorgans umfassen.

2. Anordnung nach Anspruch 1, **dadurch gekennzeichnet, dass** die Vertiefung (7) der Auflagestruktur als negative Eindrückung in der entsprechenden Seite der Auflagestruktur ausgebildet ist.

3. Anordnung nach Anspruch 1, **dadurch gekennzeichnet, dass** die Vertiefung (7) als Perforierung in einer Platte (5) der Auflagestruktur ausgebildet ist.

4. Anordnung nach einem der Ansprüche 1 bis 3, **dadurch gekennzeichnet, dass** der Stift (3) an der Auflagestruktur durch Verschweißen befestigt ist, wobei die Struktur dann eine eingedrückte oder gestanzte Metallplatte (5) umfasst.

5. Anordnung nach einem der Ansprüche 1 bis 4, **dadurch gekennzeichnet, dass** die Öse (1) durch Biegen eines aus einem Bandmaterial ausgeschnittenen Elements erzielt wird.

6. Anordnung nach Anspruch 5, **dadurch gekennzeichnet, dass** das ausgeschnittene Element die Form eines ausgesparten Ovals aufweist, das gerade Seitenabschnitte in Form von Stegen (21) und gebogene Endabschnitte (13) umfasst.

7. Anordnung nach Anspruch 5, **dadurch gekennzeichnet, dass** das ausgeschnittene Element eine längliche Gesamtform mit Enden, welche die Form von Ringen (19) aufweisen und einem Zwischenteil, der von zwei parallelen Stegen (21) gebildet wird, welche die beiden Ringabschnitte (19) miteinander verbinden, aufweist, wobei die Stege dazu gedacht sind, jeweils in ihrer Mitte gebogen zu werden, um eine Halterung (25) zum Aufnehmen des Stifts (3) zu bilden.

8. Anordnung nach Anspruch 7, **dadurch gekennzeichnet, dass** die Öse (1) zwischen den beiden Stegen (21), von jedem ringförmigen (19) Abschnitt vorstehend eine Zunge (23) umfasst, die sich bis auf die Höhe der Halterungen (25) erstreckt, um eine gewisse Blockierung der Öse auf dem Stift sicherzustellen.
